# EUROPEAN PATENT SPECIFICATION

(11) **EP 0 253 507 B1**
(45) Date of publication and mention of the grant of the patent: **23.03.1994**
(21) Application number: 87305296.3
(22) Date of filing: 15.06.1987
(51) Int. Cl.: C07D 501/06, C07F 7/18

(54) **Process for the preparation of cephalosporins**
Verfahren zur Herstellung von Cephalosporin-Derivaten
Procédé pour la préparation de céphalosporines

(30) Priority: 17.06.1986 GB 8614710
(43) Date of publication of application: 20.01.1988
(73) Proprietor: IMPERIAL CHEMICAL INDUSTRIES PLC, London SW1P 3JF (GB)
(72) Inventor: Robinson, Graham Ernest, Adlington Cheshire, SK10 4NA (GB); Squire, Christopher John, Poynton Cheshire SK12 1PW (GB)
(74) Representative: Tinsley, Rachel Maria

(56) References cited:
- EP-A- 0 037 380
- EP-A- 0 093 376
- EP-A- 0 115 770
- WO-A-85/04659

## Description

The present invention relates to a process for preparing cephalosporin derivatives having antibiotic activity and in particular relates to a process for acylating 7-aminocephalosporin derivatives to form cephalosporins having a 7-[(Z)-2-(2-aminothiazol-4-yl)-2-(2-carboxyalkoxyimino)acetamido] group. Such cephalosporins include ceftazidime, described in GB-A-2025398, and certain of the compounds described in EP-A-127992 and EP-A-164944.

It is suggested in EP-A-37380 that a suitable acylating agent for preparing such 7-substituted cephalosporins is a compound of the formula:- 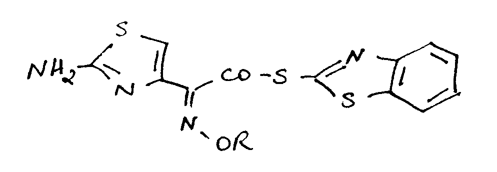
wherein inter alia R is carboxyalkyl. EP-A-93376 discloses that such compounds may be provided in protected form, wherein the carboxy group may be protected by various conventional protecting groups including silyl. Similar thiazole derivatives containing a carboxy group protected with a t-butyl group are disclosed to be useful as β-lactam intermediates in EP-A-115770. WO 85/04659 discloses thioester intermediates containing the group -COOR⁶ wherein R⁶ is an ester forming group, in particular diphenylmethyl. It appears preferable, commercially, to produce compounds wherein the carboxy group is protected by hydrocarbyl groups in particular benzyl groups and alkyl groups for example t-butyl.

We have found that in the preparation of cephalosporin antibiotics, in particular some of those of EP-A-127992 and EP-A-164944, it is inconvenient to have to remove certain such carboxy protecting groups, for example t-butyl, from the protected 7-substituted cephalosporin. The conditions for removal of such protecting groups can cause decomposition in the remainder of the molecule, in particular at the 3'-position of the cephalosporin nucleus (certain known substituents can be relatively labile) and at the β-lactam. We have found that many cephalosporin derivatives are particularly susceptible to decomposition when acid is used to remove a protecting group. These problems are important as acylation and subsequent deprotection are the last stages of an often expensive synthesis.

We have now discovered a method of acylation wherein the carboxy group is protected by a specific carboxy protecting group which allows the acylation to proceed in good yield and allows the reaction product to be deprotected under particularly mild conditions resulting in minimal decomposition of the remainder of the cephalosporin molecule.

Accordingly the present invention provides a process for preparing a cephalosporin derivative having a 7-position substituent of the formula:- 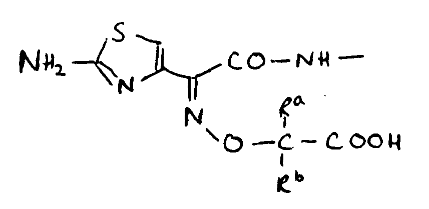
wherein R^{a} and R^{b} which may be the same or different represent hydrogen or C₁₋₄alkyl, or R^{a} and R^{b} are joined to form, together with the carbon atom to which they are attached, a C₃₋₅ cycloalkyl group, which process comprises reacting a 7-amino cephalosporin or reactive derivative thereof with a compound of the formula I: 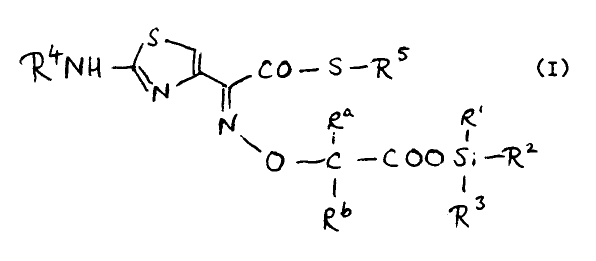
wherein R^{a} and R^{b} are as hereinabove defined, R¹, R² and R³ which may be the same or different represent C₁₋₄alkyl, phenyl or benzyl, R⁴ represents hydrogen or an amino protecting group and R⁵ represents the residue of a displaceable thioester group (R⁵SCO-), in an organic solvent, at a non-extreme temperature, and subsequently removing the silyl protecting group under mild conditions and, when R⁴ is an amino protecting group, the amino protecting group.

Although the group R⁴ has been shown attached to the 2-amino group of the thiazole ring, it will be understood that tautomeric forms of the 2-aminothiazolyl group are possible in which a protecting group R⁴ could be attached to the 1-nitrogen atom and the present invention includes such tautomeric forms, and resonance hybrids thereof, within its scope.

In a particular aspect R^{a} and R^{b} represent C₁₋₃alkyl or are joined to form, together with the carbon atom to which they are attached, a C₃₋₅ cycloalkyl group. For example -CR^{a}R^{b}- can represent -C(CH₃)₂- or cyclobutyl.

R¹, R² and R³ may be the same or different and represent C₁₋₄alkyl, phenyl and benzyl. In a preferred aspect R¹, R² and R³ are all C₁₋₄alkyl for example methyl, ethyl, n-propyl, isopropyl, n-butyl, isobutyl and t-butyl and in particular -SiR¹R²R³ is trimethylsilyl or t-butyldimethylsilyl.

R⁵ represents the residue of a displaceable thioester group (R⁵SCO-) and more suitably is a group of the formula:- 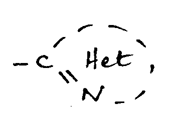
wherein Het is a 5- or 6-membered ring, optionally containing a further one or two hetero ring atoms selected from oxygen, sulphur and nitrogen and which may be fused to a benzene ring being optionally substituted. Preferred values for R⁵ include pyridyl, pyrimidinyl, triazolyl and thiazolyl. A particularly preferred value for R⁵ is benzthiazol-2-yl.

The group R⁴ is hydrogen or an amino protecting group. Conveniently the amino protecting group is readily removable, with minimal decomposition of the remainder of the cephalosporin molecule, for example by hydrolysis, hydrogenolysis or other conventional method of deprotection, for example formyl and chloroacetyl protecting groups are suitable. More conveniently however the amino protecting group is one that is removable under mild conditions similar to those under which the silyl group is removed. Most conveniently R⁴ is a silyl group of the formula -SiR¹R²R³.

The 7-amino group of the cephalosporin is optionally protected with a conventional amino protecting group. Such groups are well known and include silyl groups for example the trimethylsilyl group. Conveniently the 7-amino cephalosporin is introduced into the reaction mixture in unprotected form.

The reaction between the compound of the formula (I) and the 7-aminocephalosporin takes place conveniently in an organic solvent such as a chlorinated hydrocarbon for example chloroform or dichloromethane. The reaction is suitably performed at a no-extreme temperature such as -50°C to +70°C, more suitably between -20°C and 0°C. The reaction is advantageously carried out under substantially anhydrous conditions. The addition of a base to the reaction mixture, suitably an organic base for example triethylamine, has been found to be advantageous.

The reaction of the compound of the formula (I) and the 7-amino-cephalosporin provides a caphalosporin having a 7-position substituent of the formula:- 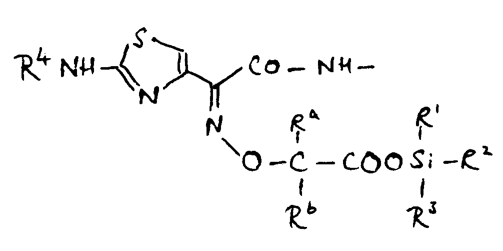
wherein R^{a}, R^{b}, R¹-R⁴ are as hereinbefore defined. The removal of the silyl protecting group or groups can be achieved under particularly mild conditions for example by hydrolysis using water or dilute mineral acid (eg. HCl). Such mild methods of hydrolysis means that there is little risk of disruption of labile groups elsewhere in the cephalosporin molecule, in particular at the C-3ʹ position. Thus the acylation process of the present invention is especially valuable for preparing cephalosporin derivatives having a relatively labile group at the C-3ʹ position, for example certain of the compounds of EP-A-127992 and EP-A-164994. The process is particularly appropriate for preparing (7R)-7-[2-(2-aminothiazol-4-yl)-2-((Z)-1-carboxy-1-methylethoxyimino)acetamido]-3-[N-ethyl-N-(1-methyl-4-thieno[2,3-d]-pyrimidinio)aminomethyl]ceph-3-em-4-carboxylate.

The compound of the formula (I) can be prepared by reacting a compound of the formula (II) 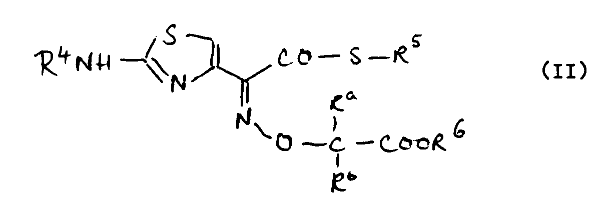
wherein R^{a}, R^{b} R⁴ and R⁵ are as hereinabove defined and R⁶ is hydrogen or a carboxy protecting group (other then -SiR¹R²R³) with a silylating agent of the formula (III): 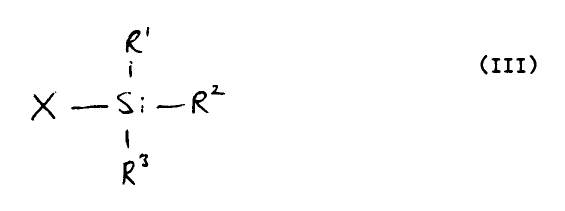
wherein R¹, R² and R³ are as hereinbefore defined and X is a leaving group, in an organic solvent at a non-extreme temperature. Such a process represents a further aspect of the present invention. Advantageously the compound of the formula (III) did not interact with the thioester group (R⁵SCO-).

The silylating agent will preferably silylate the carboxy group when R⁶ is hydrogen. Otherwise the unprotected amino group of the aminothiazolyl group will be silylated preferentially followed by replacement of the group R⁶ with another equivalent of silylating agent.

A particular meaning for X is an iodine atom, but it will be understood that the identity of the leaving group is generally not critical as it forms no part of the final reaction product.

The preparation of the compounds of the formula (I) conveniently takes place under conditions similar to those for performing the acylation rection. In a particularly favourable aspect of the present invention the acylation reaction is performed without isolation of the intermediate of the formula (I).

The following Examples serve to illustrate the invention.

### Example 1

A solution of trimethyl silyl iodide prepared from iodine (2.84g) and hexamethyldisilane (2.29ml) in dichloromethane (4. 2ml) was added to a stirred suspension of 2-(2-aminothiazol-4-yl)-2-(Z)-(1-t-butoxycarbonyl-1-methylethoxyimino)acetic acid 2-benzthiazolylthioester (4g) in dichloromethane (25ml) under argon, maintaining the temperature at 5-10°C. The reaction mixture was allowed to warm up to room temperature and stirred for 4 hours from the addition of the iodide, during which time the mixture was protected from light. NMR (CDCl₃): 0.36(s); 0.38(s); 1.85(s); 1.89(s); 0.07(s); 0.48(s); 7.36(s); 7.41(s); 7.5(m,2H); 7.95(m,1H); 8.10(m,1H).

The solution was cooled to -10°C and 3.70g of 7-amino-3-[N-ethyl-N-(1-methylthieno[2,3-d]-pyrimidinio-4-yl)aminoethyl]ceph-3-em-4-carboxylate mixed hydrochloride/hydroiodide (equivalent to 2.04g of cephalosporin free base) (as a solid) was added, followed by triethylamine (6.0ml) at such a rate as to keep the temperature at -5 to - 10°C. The reaction mixture was stirred at this temperature for a further 2.5 hours during which time all the solid gradually dissolved. HPLC analysis indicated complete reaction (less than 1% 7-amino compound remaining). Water (20ml) was then added to the solution keeping the temperature below 10°C and the mixture was then stirred for 10 minutes at room temperature. After allowing the mixture to settle the lower organic layer was run off and discarded. The aqueous solution (pH9) was cooled to 0°C and acidified with 2NHCl to pH2.4 (with efficient stirring). The resulting suspension was stirred at 0°C for a further 30 minutes and the solid filtered off, washed with water (2 x 5 ml) and dried in vacuo over phosphorus pentoxide. The yield of product ((7R)-7-[2-(2-aminothiazol-4-yl)-2-((Z)-1-carboxy-1-methylethoxy-imino)acetamido]-3-[N-ethyl-N-(1-methyl-4-thieno[2,3-d]-pyrimidino)aminomethyl]ceph-3-em-4-carboxylate, hydroiodide salt) was 5.51g representing 2.45g of cephalosporin free base. NMR (D₆-DMSO/TFA): 9.71 (1H,d, J=9Hz); 8.91 (1H,s); 8.01 (1H,d,J=5Hz); 7.88 (1H,d,J=5Hz); 7.0 (1H,s); 5.94 (1H,q); 5.35 (1H,d,J=14Hz); 5.24 (1H,d,J=5Hz); 4.80 (1H,d,J=14Hz); 4.11 (3H,s); 4.04 (2H,br.m); 3.63 (1H,d,J=18Hz); 3.45 (1H,d,J=18Hz); 1.55 (3H,s); 1.52 (3H,s); 1.36 (3H,br.m).

In a modification to the above procedure a solution of trimethylsilyl iodide (5.51 equivalents) in dichloromethane (about 6 parts by weight relative to the weight of thioester) was added to the thioester (2.62 equivalents). After 4 hours stirring at 20-25°C the reaction mixture was cooled to -20°C, dichloromethane was added to increase the solvent volume by about a third, water (2.62 equivalents) was added and finally the 7-amino cephalosporin (1.64 equivalents) was added. The reaction was continued in the same manner as above to yield the product (82%).

The NMR spectra are taken at 270 MHz and are quoted in terms of delta values in parts per million (ppm) using tetramethylsilane as internal standard (delta=0). In the quotation of NMR data s=singlet, d=doublet, t=triplet, q=quartet, m=mutiplet, br=broad. J=coupling constant.

## Claims

1. A process for preparing a cephalosporin derivative having a 7-position substituent of the formula: 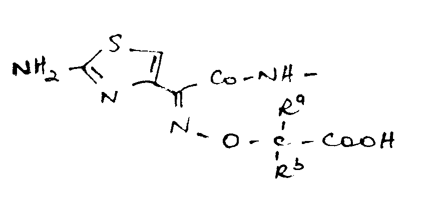 wherein R^{a} and R^{b} which may be the same or different represent hydrogen or C₁₋₄alkyl, or R^{a} and R^{b} are joined to form, together with the carbon atom to which they are attached, a C₃₋₅ cycloalkyl group, which process comprises reacting a 7-amino cephalosporin or reactive derivative thereof with a compound of the formula I: 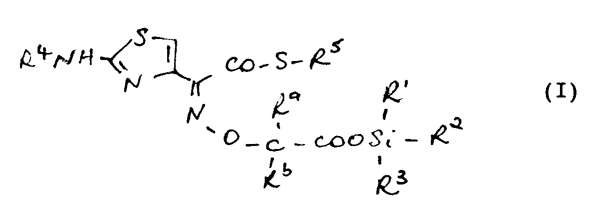 wherein R^{a} and R^{b} are as hereinabove defined, R¹, R² and R³ which may be the same or different represent C₁₋₄ alkyl, phenyl or benzyl, R⁴ represents hydrogen or an amino protecting group and R⁵ represents the residue of a displaceable thioester group (R⁵SCO-), in an organic solvent, and subsequently removing the silyl protecting group and, when R⁴ is an amino protecting group, the amino protecting group.

2. A process according to claim 1 wherein R⁵ is a group of the formula: 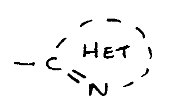 wherein Het is a 5- or 6- membered ring, optionally containing a futher one or two hereto ring atoms selected from oxygen, sulphur and nitrogen and which may be fused to a benzene ring, both the 5- or 6- membered ring and the benzene ring being optionally substituted.

3. A process according to claim 1 or claim 2 wherein R⁵ is benzthiazol-2-yl.

4. A process according to any one of claims 1 to 3 wherein R¹, R² and R³ represent C₁₋₄alkyl.

5. A process according to claim 4 wherein SiR¹R²R³ represent trimethylsilyl.

6. A process according to any one of claims 1 to 5 wherein the silyl protecting group, or groups, is removed by aqueous hydrolysis or by dilute mineral acid hydrolysis.

7. A process according to any one of claims 1 to 6 performed in the presence of a base.

8. A process according to any one of claims 1 to 7 wherein the compound of the formula (I) is prepared by reacting a compound of the formula (II): 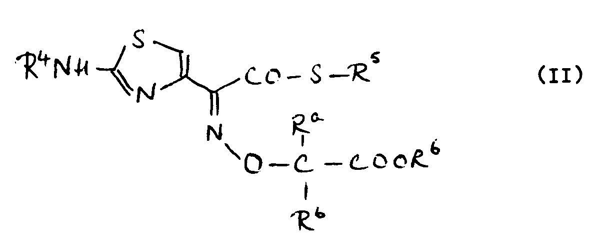 wherein R^{a}, R^{b}, R⁴ and R⁵ are as defined in claim 1 and R⁶ is hydrogen or a carboxy, protecting group (other than -SiR¹R²R³) with a compound of the formula (III): 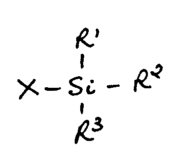 wherein R¹, R² and R³ are as defined in claim 1 and X is a leaving group.

9. A process for preparing a cephalosporin derivative having a 7-position substituent of the formula:- 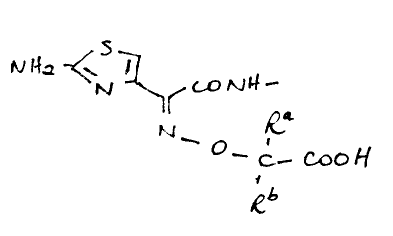 wherein R^{a} and R^{b} which may be the same or different represent hydrogen or C₁₋₄alkyl, or R^{a} and R^{b} are joined together to form, together with the carbon atom to which they are attached, a C₃₋₅ cycloalkyl group, which process comprises hydrolysing a cephalosporin derivative having 7-position substituent of the formula:

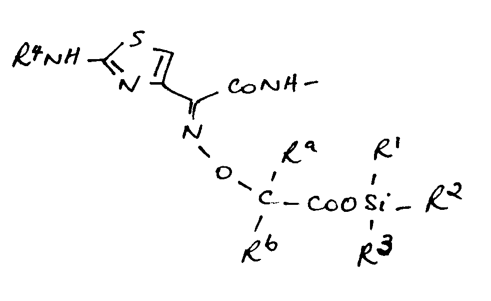

## Patentansprüche

1. Verfahren zur Herstellung eines Cephalosporin-Derivats mit einem Substituenten in Position 7, das die folgende Formel hat: 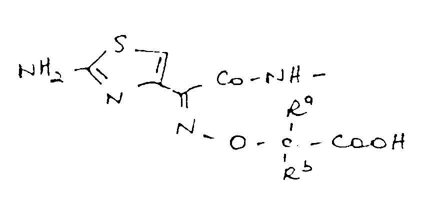 in der R^{a} und R^{b}, die gleich oder verschieden sein können, für Wasserstoff oder C₁₋₄-Alkyl stehen, oder in der R^{a} und R^{b} zusammen mit dem Kohlenstoffatom, an das sie gebunden sind, unter Bildung einer C₃₋₅-Cycloalkyl-Gruppe verbunden sind, wobei bei dem Verfahren ein 7-Aminocephalosporin oder ein reaktives Derivat davon mit einer Verbindung mit der folgenden Formel I: 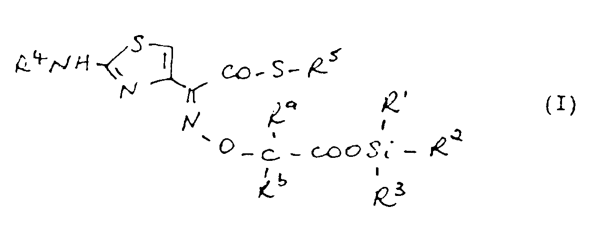 in der R^{a} und R^{b} wie oben definiert sind, R¹, R² und R³, die gleich oder verschieden sein können, für C₁₋₄-Alkyl, Phenyl oder Benzyl stehen, R⁴ für Wasserstoff oder eine Amino-Schutzgruppe steht und R⁵ für den Rest einer austauschbaren Thioester-Gruppe (R⁵SCO-) steht, in einem organischen Lösungsmittel umgesetzt wird und anschließend die Silyl-Schutzgruppe entfernt wird, und, wenn R⁴ für eine Amino-Schutzgruppe steht, die Amino-Schutzgruppe.

2. Verfahren nach Anspruch 1, wobei R⁵ für eine Gruppe mit der folgenden Formel steht: 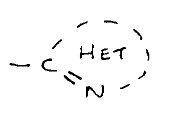 in der Het für einen 5- oder 6-gliedrigen Ring steht, der gegebenenfalls ein weiteres oder zwei aus Sauerstoff, Schwefel und Stickstoff ausgewählte Heteroringatome enthält, und der an einem Benzolring kondensiert sein kann, wobei sowohl der 5- als auch der 6-gliedrige Ring und der Benzolring gegebenenfalls substituiert sein können.

3. Verfahren nach Anspruch 1 oder Anspruch 2, wobei R⁵ für Benzthiazol-2-yl steht.

4. Verfahren nach einem der Ansprüche 1 bis 3, wobei R¹, R² und R³ für C₁₋₄-Alkyl stehen.

5. Verfahren nach Anspruch 4, wobei SiR¹R²R³ für Trimethylsilyl steht.

6. Verfahren nach einem der Ansprüche 1 bis 5, wobei die Silyl-Schutzgruppe oder -Gruppen durch wäßrige Hydrolyse oder durch Hydrolyse mit einer verdünnten Mineralsäure entfernt wird.

7. Verfahren nach einem der Ansprüche 1 bis 6, wobei dieses in Gegenwart einer Base durchgeführt wird.

8. Verfahren nach einem der Ansprüche 1 bis 7, wobei die Verbindung mit der Formel (I) durch Umsetzung einer Verbindung mit der folgenden Formel (II): 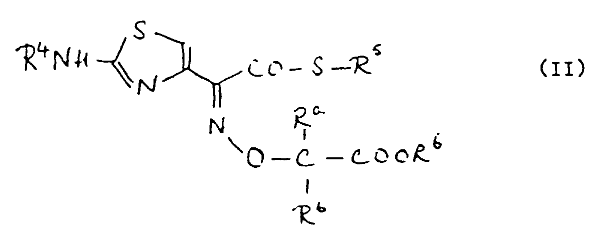 in der R^{a}, R^{b}, R⁴ und R⁵ wie in Anspruch 1 definiert sind und R⁶ für Wasserstoff oder eine Carboxy-Schutzgruppe (eine andere als -SiR¹R²R³) steht, mit einer Verbindung mit der folgenden Formel (III): 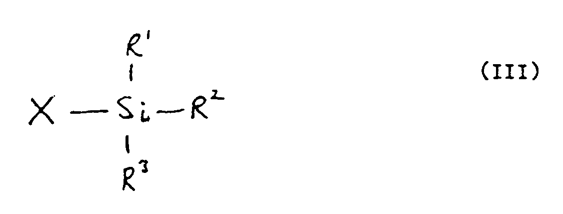 in der R¹, R² und R³ wie in Anspruch 1 definiert sind und X für eine Austrittsgruppe steht, hergestellt wird.

9. Verfahren zur Herstellung eines Cephalosporin-Derivats mit einem Substituenten in Position 7, das die folgende Formel hat:- 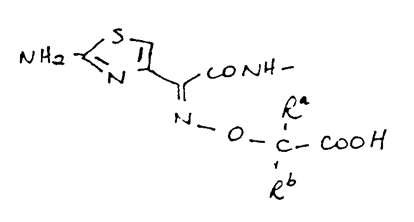 in der R^{a} und R^{b}, die gleich oder verschieden sein können, für Wasserstoff oder C₁₋₄-Alkyl stehen, oder in der R^{a} und R^{b} zusammen mit dem Kohlenstoffatom, an das sie gebunden sind, unter Bildung einer C₃₋₅-Cycloalkyl-Gruppe verbunden sind, wobei bei dem Verfahren ein Cephalosporin-Derivat mit einem Substituenten in Position 7, das die folgende Formel hat: 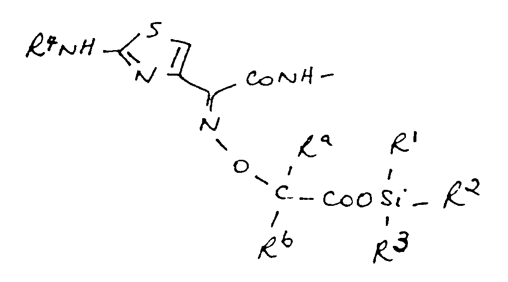 hydrolysiert wird.

## Revendications

1. Procédé de préparation d'un dérivé de céphalosporine ayant un substituant en position 7, de formule : 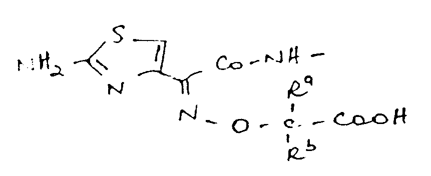 dans laquelle R^{a} et R^{b}, qui peuvent être identiques ou différents, représentent l'hydrogène ou des groupes alkyle en C₁ à C₄, ou bien R^{a} et R^{b} sont réunis pour former, conjointement avec l'atome de carbone auquel ils sont fixés, un groupe cycloalkyle en C₃ à C₅, procédé qui comprend la réaction d'une 7-aminocéphalosporine ou d'un de ses dérivés réactifs avec un composé de formule I : 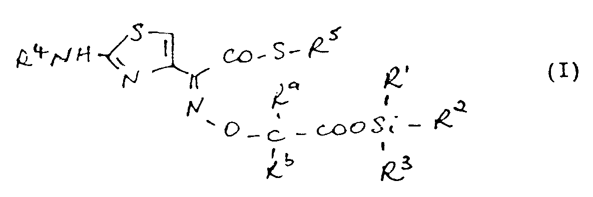 dans laquelle R^{a} et R^{b} répondent aux définitions précitées, R¹, R² et R³, qui peuvent être identiques ou différents, représentent des groupes alkyle en C₁ à C₄, phényle ou benzyle, R⁴ représente l'hydrogène ou un groupe protecteur de la fonction amino et R⁵ représente le résidu d'un groupe thioester déplaçable (R⁵SCO-), dans un solvant organique, puis l'élimination du groupe protecteur silyle et, lorsque R⁴ représente un groupe protecteur de la fonction amino, du groupe protecteur de la fonction amino.

2. Procédé suivant la revendication 1, dans lequel R⁵ représente un groupe de formule : 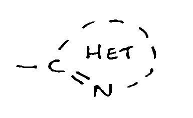 dans laquelle Het représente un noyau penta- ou hexagonal, contenant facultativement un ou deux hétéroatomes supplémentaires dans le noyau, choisis entre l'oxygène, le soufre et l'azote, et qui peut être condensé avec un noyau benzénique, le noyau penta- ou hexagonal et le noyau benzénique étant facultativement substitués.

3. Procédé suivant la revendication 1 ou la revendication 2, dans lequel R⁵ représente un groupe benzthiazole-2-yle.

4. Procédé suivant l'une quelconque des revendications 1 à 3, dans lequel R¹, R² et R³ représentent des groupes alkyle en C₁ à C₄.

5. Procédé suivant la revendication 4, dans lequel SiR¹R²R³ représente un groupe triméthylsilyle.

6. Procédé suivant l'une quelconque des revendications 1 à 5, dans lequel le ou les groupes protecteurs silyle sont éliminés par hydrolyse aqueuse ou hydrolyse avec un acide minéral dilué.

7. Procédé suivant l'une quelconque des revendications 1 à 6, mis en oeuvre en présence d'une base.

8. Procédé suivant l'une quelconque des revendications 1 à 7, dans lequel le composé de formule (I) est préparé par réaction d'un composé de formule (II) : 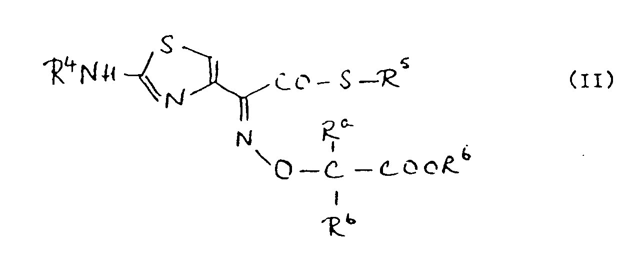 dans laquelle R^{a}, R^{b}, R⁴ et R⁵ répondent aux définitions suivant la revendication 1 et R⁶ représente l'hydrogène ou un groupe protecteur de la fonction carboxy (autre que -SiR¹R²R³), avec un composé de formule (III) : 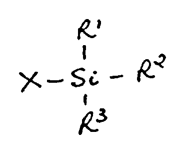 dans laquelle R¹, R² et R³ répondent aux définitions suivant la revendication 1 et X représente un groupe partant.

9. Procédé de préparation d'un dérivé de céphalosphorine possédant un substituant en position 7, de formule : 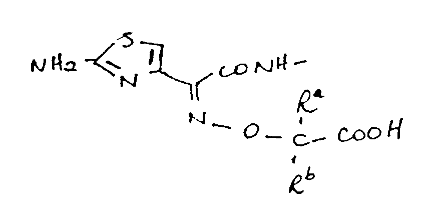 dans laquelle R^{a} et R^{b}, qui peuvent être identiques ou différents, représentent l'hydrogène ou des groupes alkyle en C₁ à C₄, ou bien R^{a} et R^{b} sont réunis pour former, conjointement avec l'atome de carbone auquel ils sont fixés, un groupe cycloalkyle en C₃ à C₅, procédé qui comprend l'hydrolyse d'un dérivé de céphalosporine possédant un substituant en position 7, de formule :
